(19) Europäisches Patentamt
European Patent Office
Office européen des brevets

(11) **EP 4 571 578 A1**

(12) **EUROPEAN PATENT APPLICATION**

(43) Date of publication:
**18.06.2025 Bulletin 2025/25**

(21) Application number: **23307210.7**

(22) Date of filing: **14.12.2023**

(51) International Patent Classification (IPC):
***G06N 3/0455*** (2023.01)   ***G06N 3/09*** (2023.01)

(52) Cooperative Patent Classification (CPC):
**G06N 3/0455; G06N 3/09;** G06N 3/0442;
G06N 3/0464; G06N 3/096

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **7 Sensing Software
75012 Paris (FR)**

(72) Inventors:
• **CHACON-ALAM, Ashley
92130 Issy-les-Moulineaux (FR)**

• **EL QOUNS, Abdelkarim
75019 Paris (FR)**
• **KNYSH, Borys
78000 Versailles (FR)**
• **SAKSENA, Saumya Kumaar
94100 Saint-Maur-des-Fossés (FR)**

(74) Representative: **Novagraaf Technologies
Bâtiment O2
2, rue Sarah Bernhardt
CS90017
92665 Asnières-sur-Seine Cedex (FR)**

(54) **NEURAL NETWORK-BASED DATA FUSION APPARATUS AND METHOD WITH ASSOCIATED TRAINING METHOD**

(57)    A neural network architecture is disclosed for data fusion applications. The neural network comprises a plurality of encoders, each encoder being configured to receive input data from a set of data sources among the plurality of data sources, the sets of data sources being different from one another, and one single decoder configured to receive a feature vector generated by one of the encoders and to generate an estimation based on the received feature vector. For example, in a vital sign monitoring application, the first data source is a PPG sensor and the second data source is an IMU. The neural network comprises two encoders, a first encoder receiving PPG signals from the PPG sensor and the second encoder receiving both PPG data and IMU data. When both sensors are functional, the decoder provides estimations based on the feature vector output by the second encoder. When the IMU is malfunctioning, the decoder provides estimations based on the feature vector output by the first encoder. Several training method are disclosed including joint training, sequential training and shared training.

FIG.1

**Description**

TECHNICAL FIELD

Various example embodiments relate generally to neural network-based data fusion methods and apparatus.

BACKGROUND

Data fusion has become a critical area in many fields of technology, for example in autonomous driving, augmented and/or virtual reality, vital signs monitoring etc. In such applications, multiple sources of data are used providing data of different types. With a large amount of data to process and fuse together from different sources to generate some usable information, typical fusion methods struggle because they rely on handcrafted tools and parameters. Parameters which are suitable for a certain use case, can usually not be generalized to cover other use cases. Additionally, with many sources available, it's becoming harder to determine which sources are best suited for an application and which fusion methods are appropriate for the sources that are chosen and for the deployment platform.
Neural networks have become popular for data fusion because they do not require handcrafted rules. They learn certain features from given input data and therefore they can generalize much more than conventional methods. Neural network-based data fusion methods have the advantage of being applicable in numerous fields with a level of adaptability that the conventional fusion methods don't allow. However, neural networks are usually trained in a supervised learning manner, implying fixed inputs and targets (also referred to as ground truths) during an optimization procedure. At inference time, the neural networks require a fixed number of inputs to produce an output, which means that all inputs must be available at a given moment for the neural network to produce a reliable estimation. This is an important limitation in many use cases.
Therefore, there is need for a neural network-based data fusion solution that provides more flexibility.

SUMMARY

According to some aspects, there is provided the subject matter of the independent claims. Some further aspects are defined in the dependent claims.
In a first aspect, an apparatus is disclosed comprising a neural network module for receiving input data from a plurality of data sources. The neural network module comprises a plurality of encoders, a given encoder being configured to receive input data from a given set of data sources among the plurality of data sources, the sets of data sources being different from one another, and a decoder configured to receive a feature vector generated by one of the encoders and to generate an estimation based on the received feature vector.
In an embodiment, the apparatus further comprises a selection module for selecting among the plurality of encoders, at a given point in time, the encoder which feature vector is received by the decoder and used to generate the estimation.
In an embodiment of the apparatus, the selection is based on the availability of the input data at the encoders at the given point in time. For example, the selection module is configured to select an encoder which, at the given point in time, receives input data from all data sources of its set of data sources.
In a second aspect, a computer implemented data fusion method is disclosed. The data fusion method comprises receiving input data and providing the input data to a neural network which comprises a plurality of encoders, a given encoder being configured to receive input data from a given set of data sources among the plurality of data sources, the sets of data sources being different from one another, and a decoder configured to receive a feature vector generated by one of the encoders and to generate an estimation based on the received feature vector.
In an embodiment, the computer implemented data fusion method further comprises selecting among the plurality of encoders, at a given point in time, the encoder which feature vector is received by the decoder and used to generate the estimation. For example, said selecting is based on the availability of the input data at the encoders at the given point in time. For example, said selecting comprises selecting the encoder which, at the given point in time, receives input data from all data sources of its set of data sources.
In an embodiment of the disclosed apparatus and the disclosed data fusion method, at least part of the data sources are sensors.
A third aspect relates to a computer implemented method for training a neural network of the disclosed apparatus or data fusion method. The disclosed training method uses training data comprising training input data for all data sources, and target estimations corresponding to said training input data.
In a first embodiment, a sequential training method is disclosed. The disclosed sequential training method comprises N steps, N being the number of encoders in the neural network. At step k, k being an integer within 1 and N:

- a supervised learning loss $L_k^{SL}$ is calculated for a combination of the encoder $E_k$ and the decoder D,

- when k is higher than 1, a knowledge distillation loss $L_{i,k}^{KD}$ is calculated for each combination of the encoder $E_i$ and the decoder D, i being an integer varying within 1 and k-1,

- a total loss $L_k^T$ is calculated from the supervised learning loss $L_k^{SL}$ and the knowledge distillation loss(es) $L_{i,k}^{KD}$,

- parameters are learned for the encoder $E_k$ and the decoder D by optimizing the total loss $L_k^T$,

- the parameters learned for the encoder $E_k$ are frozen upon convergence of the total loss $L_k^T$.

The supervised learning loss $L_k^{SL}$ is calculated by comparing estimations provided by the combination $E_k D$ of the encoder $E_k$ and the decoder D, based on the training input data for the set of data sources of the encoder $E_k$, with the target estimations corresponding to said training input data. And the knowledge distillation loss $L_{i,k}^{KD}$ is calculated by comparing estimations provided by the combination $E_i D$ of the encoder $E_i$ and the decoder D, based on the training input data for the set of data sources of the encoder $E_i$, with reference estimations provided by the combination $E_i D^{k-1}$ of the encoder $E_i$ and the decoder D when the parameters of the decoder D are set to the parameters learned during the previous step k-1.

In a second embodiment, a joint training method is disclosed. In the joint training method, a supervised learning loss $L_k^{SL}$ is calculated for each combination of an encoder $E_k$ and the decoder D, k being an integer within 1 and N, N being the number of encoders in the neural network. As described above, the supervised learning loss $L_k^{SL}$ is computed by comparing estimations provided by the combination of the encoder $E_k$ and the decoder D, based on the training input data for the set of data sources of the encoder $E_k$, with the target estimations corresponding to said training input data. Then a total loss $L^T$ is calculated from the N supervised learning losses $L_k^{SL}$, k=1 to N. The parameters are learned jointly for the encoders and the decoder by optimizing the total loss $L^T$.

In a third embodiment, a shared training method is disclosed. In the shared training method, N combinations of an encoder $E_k$ and a decoder $D_k$ are trained by sharing a feature space $Z_k$ obtained separately by each encoder $E_k$, and parameters $P_k$ obtained separately for each decoder $D_k$, and upon convergence, a single set of optimized parameters for the decoder D is obtained from the N sets of separately optimized parameters $P_k$, k=1 to N.

In another aspect, a computer program is disclosed comprising instructions which when executed by an apparatus cause the apparatus to perform any of the training methods described herein.

In another aspect, a non-transitory storage medium is disclosed comprising program instructions which when executed by an apparatus cause the apparatus to perform any of the training methods described herein.

In another aspect, a computer program is disclosed comprising instructions which when executed by an apparatus cause the apparatus to perform any of the data fusion methods as described herein.

In another aspect, a non-transitory storage medium is disclosed comprising program instructions which when executed by an apparatus cause the apparatus to perform any of the data fusion methods as described herein.

BRIEF DESCRIPTION OF THE DRAWINGS

Example embodiments will become more fully understood from the detailed description given herein below and the accompanying drawings, which are given by way of illustration only and thus are not limiting of this disclosure.

FIG.1 is a block diagram of an apparatus configured to perform a data fusion method as disclosed herein.
FIG.2. is a block diagram of an exemplary embodiment of the apparatus of FIG.1 with two data sources.
FIG.3 is a block diagram illustrating an exemplary sequential training method for a neural network comprising two encoders.
FIG.4 is a block diagram illustrating an exemplary shared training method for a neural network comprising two encoders.
FIG.5 is a block diagram of an apparatus for implementing a data fusion method as disclosed herein, or a training method as disclosed herein.

## DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

The present disclosure relates to neural networks, more specifically deep neural networks (DNNs) that have an encoder-decoder architecture. Such a DNN is typically constructed from two fundamental blocks, an encoder and a decoder, along with a collection of annotated data points called dataset, which is used to train the DNN. A DNN can comprise multiple encoders and decoders at the same time, depending upon the use case.

Typically, an encoder consists in a stack of processing layers such as convolutions, LSTMs, GRUs etc. These layers have tunable parameters which are updated during a process commonly referred to as training the DNN. In practice, the encoder receives input data (which could be text, videos, static images, etc.) and transforms it into a compressed and a smarter version of it, commonly referred to as feature vector. The feature vectors belong to a latent space (or feature space) used by the decoder part of the DNN.

Like an encoder, a decoder is often composed of a stack of processing layers with tunable parameters that are updated during training. The decoder is primarily meant to transform (or decode) the smart latent space generated by the encoder to a certain desired output.

A dataset, in the context of artificial intelligence, is a collection of annotated data points (either captured from real sensors or simulated synthetically). These data points serve as training and testing data for training and testing the DNN. These data points can also be referred to as samples. The dataset primarily consists of two components: input data and corresponding output data or ground truth. The input data are given as input to the DNN. For example, the input data are sensor data e.g. an electrocardiogram signal (ECG) can constitute an input to a DNN for vital signs monitoring applications. The ground truth is a target estimation corresponding to a given set of input data that the DNN tries to learn while training. For example, the ground truth can be a heart rate (HR) which the DNN tries to learn from corresponding training ECG input data.

A loss function, or a cost function, is used to evaluate how well the DNN understands the dataset. The training process consists in updating the tunable parameters of the DNN to optimize the loss function. For example, if the DNN outputs are totally off from the expected ground truths, the loss function returns a high number. Whereas, if the outputs are good, it returns a low number. Optimizing the loss function consists in updating the tunable parameters of the DNN so that the loss function returns the lowest number possible.

The tunable parameters of the DNN are updated using the training data until the loss function converges. Once the training process is completed, the parameters are frozen, and the DNN is tested with the testing data to check how well it performs on data it has never seen before.

The training and the testing processes of a DNN will now be described briefly. The training process typically comprises several iterations of the following steps. First, the training input data are fed to the DNN and a full forward pass through the DNN is performed, which means that the data points traverse the full DNN thereby generating some outputs at the end. Second, a loss value is computed indicating the distance between the estimations provided by the DNN and the desired outputs (i.e. the target estimations or ground truth values corresponding to the training input data). Third, the tunable parameters of the DNN are updated in a way to reduce the loss value in the next iteration of the full forward pass.

Then, when the loss value doesn't improve any longer (in other words, upon converge of the above-described process) the parameters of the DNN are frozen. And DNN is tested by feeding the testing input data to the DNN. A full forward pass is performed so that the data points traverse the full DNN, thereby generating some estimations at the end. This process is also called inference. Finally, a metric value is computed indicating the distance between the estimation generated by the frozen DNN and the target estimations (or ground truth values) corresponding to the testing input data, indicating the performance of the frozen DNN. When the performance is satisfactory the frozen DNN can be released in production.

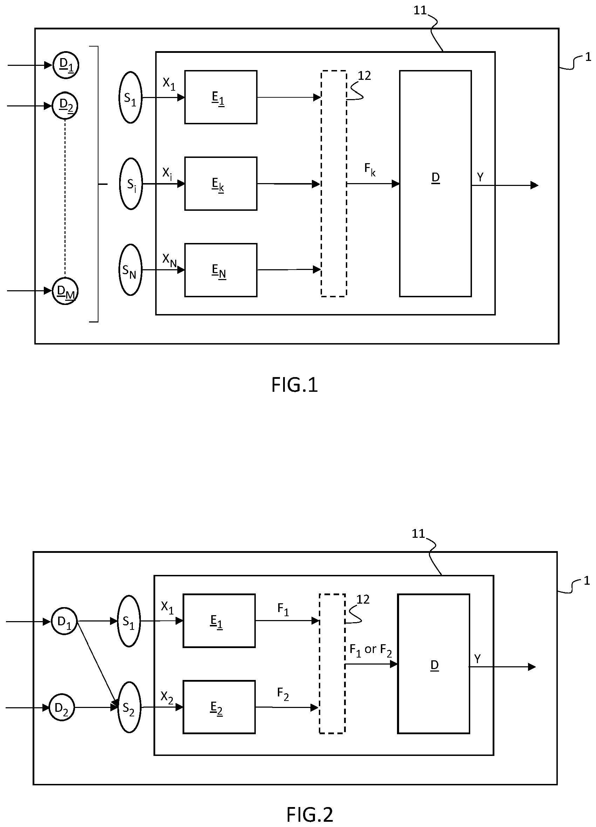

FIG.1 is a block diagram of an apparatus 1 comprising a neural network module 11 as disclosed herein, configured to receive input data from a plurality of data sources. The neural network module 11 comprises N encoders $E_1$, ..., $E_N$. Each encoder $E_k$ (with k an integer within 1 and N) is configured to receive input data $X_k$ from a given set of data sources $S_k$ among the plurality of data sources $D_1$, ..., $D_M$ (with M an integer which can be different from N), the set of data sources $S_k$ being different from one another. The encoder $E_k$ are configured to generate a feature vector $F_k$ in a feature space from their input data $X_k$. The neural network module 11 further comprises a decoder D configured to receive the feature vector $F_k$ generated by one of the encoders $E_k$ and to provide an estimation Y based on the received feature vector.

In this architecture, the decoder D is common to all encoders $E_k$.

For example, the data sources are sensors. The apparatus 1 can be a car e.g. for an autonomous driving application. It can be a mobile phone or a computer e.g. for an augmented or a virtual reality application. It can be a wearable item e.g. a smartwatch or a smart ring or a fitness tracker e.g. for a vital signs monitoring application.

In an embodiment, the apparatus 1 further comprises a selection module 12 for selecting among the N encoders $E_1$, ..., $E_N$, at a given point in time, the encoder $E_k$ which feature vector $F_k$ is received by the decoder D and used to generate the estimation Y. For example, the selection is based on the availability of the input data at the encoders at the given point in time. For example, the selection module is configured to select one encoder $E_k$ which, at the given point in time, receives input data from all data sources of its set of data sources $S_k$. If several encoders receive input data from all their data sources at a given point in time, the selection module can select the one with the largest number of data sources in its set of data sources. Or different priorities can be given to different encoders depending on the importance of their set of data sources for the target application.

Alternatively, the encoder $E_k$ can be configured so that they don't provide any feature vector to the decoder D when they don't receive input data from all data sources of their set of data sources $S_k$. And the decoder D can be configured to prioritize encoders over one another and use the feature vector $F_k$ of the encoder $E_k$ which has the highest priority.

FIG.2 is an example of an apparatus as depicted above with two data sources D, and $D_2$ and two sets of data sources $S_1$ and $S_2$: the first set $S_1$ comprising the data source $D_1$ and the second set $S_2$ comprising both the data sources $D_1$ and $D_2$. The set $S_1$ is an input to an encoder $E_1$ and the set $S_2$ is an input to an encoder $E_2$. At a given time, one of the feature vectors $F_1$ or $F_2$ generated by the encoders $E_1$ and $E_2$ respectively is used as input by the decoder D to deliver an estimation Y.

For example, the apparatus of FIG.2 can be a mobile phone configured to perform a depth densification from low-resolution direct time-of-flight (dToF) data obtained by a dToF sensor and from a RGB image signal captured by a camera. In this example, the first data source $D_1$ is the camera and the second data source $D_2$ is the dToF sensor. When both the dToF data and the RGB image data are available, the neural network produces an estimation based on the feature vector $F_2$ generated by the encoder $E_2$ from the RGB image signal and the dToF signal. However, the dToF sensor has a lower frequency than the camera. It means that the dToF data won't be available at all time. When the dToF data are not available, the neural network produces an estimation based on the feature vector $F_1$ generated by the encoder $E_1$ from the RGB image signal provided by the camera. The unavailability of the dToF data can also be due to a failure of the dToF sensor. In this first example, the encoder $E_2$ has a higher priority than the encoder $E_1$, because its set of data is more complete and allows to obtain better estimations. However, when the dToF signal is not available, the encoder $E_1$ of lower priority is used.

In another example relating to autonomous driving, cameras and LIDARs are used to collect input data. Typically, a camera runs at 30 FPS (frames per second) and a LiDAR runs at a lower FPS (around 10 to 15). Input data from the cameras can be processed by a first encoder $E_1$ whereas a second encoder $E_2$ can process the input data coming from both the cameras and the LIDARs. The system will perform correctly at 30 FPS by utilizing the camera input (encoder $E_1$) and it will use LiDAR in addition (encoder $E_2$) when available to improve the performance.

As will be understood from the above examples, a first advantage of the disclosed solution is to provide reliable estimations when some data are missing.

In a real-life system, data are commonly provided by sensors and unexpected loss of data is not uncommon. In fact, hardware / firmware failures are frequently observed which cause the sensors to malfunction. The disclosed architecture continues to work when a sensor is malfunctioning while others are working correctly.

Another recurrent phenomenon in real-life systems is that several sensors used together have different sampling frequencies. The most common approach to tackle this problem is to down sample the sensor which has a higher sampling frequency, to the sensor with the lower sampling frequency thereby reducing the reactivity of the system. The disclosed architecture allows to operate at the frequency of the fastest sensor and therefore increases the responsiveness of the system.

Another advantage of the proposed architecture, from the perspective of an embedded platform implementing the solution (such as a microcontroller), is to reduce the memory footprint of the DNN. Since the same decoder D is reused for all encoders $E_k$, the architecture constitutes a single DNN rather than an ensemble of multiple DNNs, which would cause significant increase in the total size.

In addition, space and time complexity are also reduced at inference time as the disclosed architecture comprises multiple encoders, but only one encoder is used at a given time. Hence, the disclosed neural network requires minimal CPU resources to operate, which are similar to the resources required by one single neural network. By comparison, an architecture based on an ensemble of neural networks (i.e. several combinations of an encoder and a decoder) would require more CPU resources to operate.

In summary, the disclosed the DNN-based fusion method provides a single neural network that can adapt to different numbers and combinations of input sensors for data fusion. It relaxes the fixed number of sensors requirement of conventional DNN and provides the system with the ability to work with an optional input, meaning that an output can be produced even when not all the data from all the sensors are present as the input. It improves the performance without creating too much additional resource consumption.

Several training methods can be used for training the neural network 11. Three training methods will now be described, referred to as joint training, sequential training and shared training respectively. This is not limitative. Other training methods can be used.

In the joint training method, all the encoders $E_k$ are trained at the same time, together with the decoder D, by supervised learning, using the ground truth available in the training dataset. A supervised learning loss denoted $L_k^{SL}$ is computed for each combination of an encoder $E_k$ and the decoder D, k being an integer within 1 and N, N being the number of encoders in the neural network. The supervised learning loss $L_k^{SL}$ is computed by comparing estimations provided by the combination of the encoder $E_k$ and the decoder D, based on the training input data for the set of data sources of the encoder $E_k$, with the target estimations (or ground truth values) corresponding to said training input data.

For example, $L_k^{SL} = \sum_{j=0}^{P_k} loss(E_k D(X_j), Y_j)$ with $P_k$ being the number of samples $X_j$ in the training input data for the set of data sources of the encoder $E_k$ and $Y_j$ being the target estimations corresponding to the samples $X_j$.

Then a total loss $L^T$ is calculated from the N supervised learning losses $L_k^{SL}$ and the parameters for all encoders $E_k$ and the decoder D are learned jointly by optimizing the total loss $L^T$.

For example, $L^T = \sum_{k=1}^{N} L_k^{SL}$.

The above-described joint training can be advantageous when the learning complexity is similar for all encoders $E_k$ so that the supervised learning losses of the encoders need about the same time to converge.

In the sequential training method, encoders are trained one after the others. The training process comprises N steps, N being the number of encoders. When training converges for an encoder $E_k$, its parameters are frozen with the best values obtained at convergence and a next encoder is added to the architecture for training, until all N encoders have been trained. At each step of the training process, the task to be learned is a new task: a different set of training input data needs to be used to predict the same outputs. While learning the new task, the neural network should ideally not forget how to use the earlier sets to predict the outputs. As will be further described below, this is achieved by replacing the supervised learning loss with a knowledge distillation loss for encoders which have been trained during the previous steps to make sure that the decoder D doesn't not forget the old tasks, while learning the new one. The knowledge distillation loss helps the neural network retain a certain memory, by mimicking its own behavior at the convergence points in the previous training steps.

At step k of the training process, the architecture comprises k encoders $E_1$, ..., $E_k$ with k being within 1 and N, N being the number of encoders in the final architecture. A supervised learning loss denoted $L_k^{SL}$ is computed for the combination of the encoder $E_k$ and the decoder D. As previously described, the supervised learning loss $L_k^{SL}$ is computed by comparing estimations provided by the combination of the encoder $E_k$ and the decoder D, based on the training input data for the set of data sources of the encoder $E_k$, with the target estimations corresponding to said training input data.

For example, $L_k^{SL} = \sum_{j=0}^{P_k} loss(E_k D(X_j), Y_j)$ with $P_k$ being the number of samples $X_j$ in the training input data for the set of data sources of the encoder $E_k$ and $Y_j$ being the target estimations (or ground truth values) corresponding to the samples $X_j$.

A knowledge distillation loss $L_{i,k}^{KD}$ is computed for each combination $E_i D$ of an encoder $E_i$ (i=1, ..., k-1) with the decoder D. The parameters of all encoders $E_i$ (i=1, ..., k-1) are frozen to the best parameters obtained for each encoder $E_i$ at step k=i. The knowledge distillation loss $L_{i,k}^{KD}$ is computed by comparing estimations provided by the combination $E_i D$ of the encoder $E_i$ and the decoder D, with reference estimations provided by the combination $E_i D^{k-1}$ of the encoder $E_i$ (which parameters have been frozen at step k=i) and the decoder D when the parameters of the decoder D are set to the best parameters learned during the previous step k-1.

For example, $K_{i,k}^{KD} = \sum_{j=0}^{P_i} loss(E_i D(X_j), E_i D^{k-1}(X_j))$ with $P_i$ being the number of samples $X_j$ in the training input data for the set of data sources of the encoder $E_i$, $D^{k-1}$ is the decoder D with parameters frozen to the best parameters obtained at the previous training step k-1, and $E_iD^{k-1}(X_j)$ being the estimations provided by the combination of the encoder $E_i$ and the decoder $D^{k-1}$ for the input samples $X_j$.

Then a total loss $L_k^T$ is calculated from the supervised learning losses $L_k^{SL}$ and the (k-1) knowledge distillation losses $L_{i,k}^{KD}$.

For example, $$L_k^T = L_k^{SL} + \sum_{i=1}^{k-1} L_{i,k}^{KD}.$$

The parameters of the encoder $E_k$ and the decoder D are updated to optimize the total loss until convergence is reached. At convergence, the parameters of the encoder $E_k$ are frozen and the training process proceeds with the next step (k=k+1) until k=N.

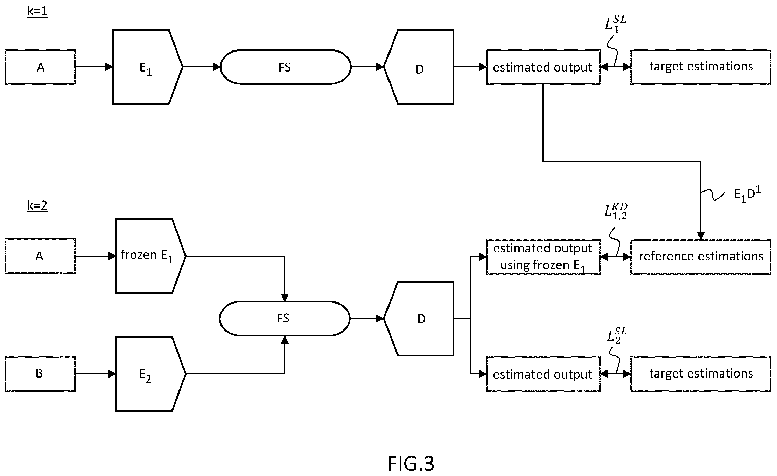

The above-described sequential training approach is depicted in FIG.3 in the particular case where N=2.

At training step k=1 the training architecture comprises one encoder $E_1$ which is trained in combination with the decoder D. The encoder $E_1$ receives training input data A corresponding to a first data source which constitutes a first set of data source. The supervised learning loss $L_1^{SL}$ is calculated between estimated outputs and target estimations (or ground truth) and the parameters of the encoder $E_1$ and the decoder D are updated to reduce the difference. Upon convergence, the encoder $E_1$ is considered as trained. Training the encoder $E_1$ is stopped and the parameters of the encoder $E_1$ are frozen to the values obtained at convergence (also referred to as best parameters). The sequential training method proceeds to the next training step (k=2).

At training step k=2, an additional encoder $E_2$ is added to the architecture. The encoder $E_2$ receives training input data A corresponding to the first data source and training input data B corresponding to a second data source. The first and second data sources constitute a second set of data sources feeding the second encoder $E_2$. A supervised learning loss $L_2^{SL}$ is calculated for the encoder $E_2$. The supervised learning loss $L_2^{SL}$ is calculated between estimated outputs of the combination $E_2D$ of the second encoder $E_2$ and the decoder D, and the corresponding target estimations (or ground truth). A knowledge distillation loss $L_{1,2}^{KD}$ is calculated for the encoder $E_1$. The knowledge distillation loss $L_{1,2}^{KD}$ is computed between estimated outputs of the combination $E_1D$ of the first encoder $E_1$ (which parameters are frozen to the best parameters obtained at step k=1) and the decoder D, and reference estimations (instead of the ground truth values). The reference estimations are obtained by the combination $E_1D^1$ of the first encoder $E_1$ (with frozen parameters) and the decoder $D^1$ which parameters are set to the best parameters obtained for the decoder D at the previous step k=1. The total loss $$L_2^T = L_2^{SL} + L_{1,2}^{KD}$$ is computed. The second encoder $E_2$ and the decoder D are considered as trained upon convergence of the total loss $L_2^T$. The parameters of the encoder $E_2$ and the decoder D are frozen to the parameters obtained at step k=2.

The sequential training method can be more efficient than the joint training method e.g. when the learning complexity differs significantly between encoders (due to the data sources being different).

Another advantage of the sequential training method is the modularity that can be achieved. Indeed, it makes it possible to reuse an existing neural network when there is an additional source of data to be taken into consideration, without having to train the whole neural network again. The existing neural network can be reused and one or more encoders can be added to integrate the additional data source. Only one training step will be required per additional encoder.

For example, a smartwatch configured to estimate the breathing rate of a user from a photoplethysmogram (PPG) signal provided by a PPG sensor usually comprises an inertial measurement unit (e.g. an accelerometer). It can be advantageous to use the data provided by such inertial measurement unit and fuse them with the PPG data to obtain better performance of the breathing rate estimation. The inertial measurement unit can be added as optional input to an existing neural network module. Referring to the example depicted in FIG.3, only the second training step k=2 will need to be executed to train the upgraded neural network.

As will be understood from the above examples, with the sequential training method, the architecture of the disclosed neural network can be easily adapted, with a limited training effort, to make use of the data provided by an additional sensor as and when required.

In the shared training method, N combinations of an encoder $E_k$ and a decoder $D_k$ (k=1 to N) are trained conjointly by sharing the feature spaces obtained separately by all encoders $E_k$ and the tunable parameters obtained separately for each decoder $D_k$. Different implementations of a shared training method will now be described.

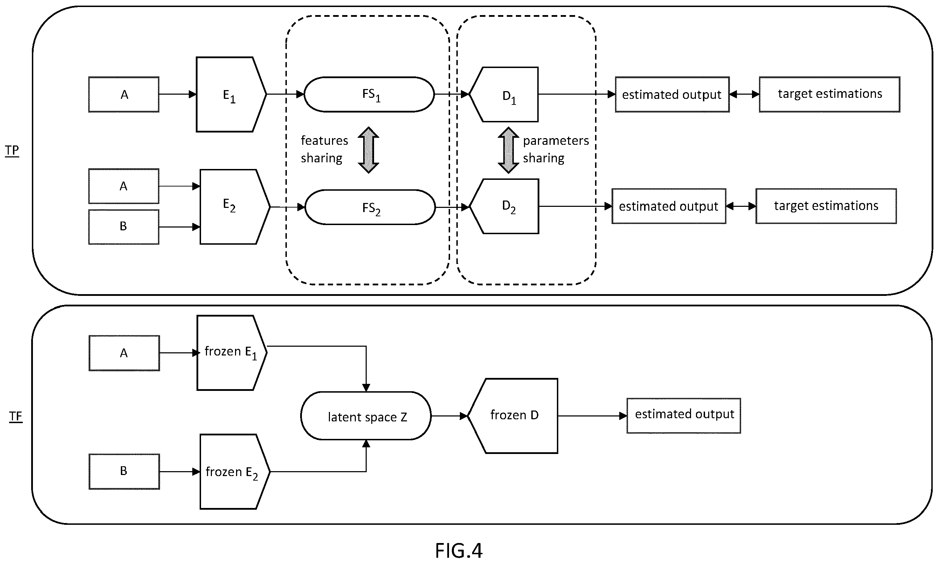

FIG.4 depicts an example of such a shared training method when N=2. As depicted in FIG.4, in a preliminary phase TP of the training, two different neural networks are set up and trained separately while sharing their feature spaces $Z_1$ and $Z_2$ and the set $P_1$ and $P_2$ of tunable parameters of the decoders $D_1$ and $D_2$. At convergence, in a final phase TF, a final architecture is built which comprises the two encoders $E_1$ and $E_2$ with one single feature space Z, and one decoder D.

During the preliminary phase, since both neural network $E_1D_1$ and $E_2D_2$ are trained and updated individually, they learn their own tasks. Due to feature space and parameter sharing they also learn the tasks of the other neural network to some extent. After both neural networks have converged (i.e. the loss function starts returning small values for both neural networks), a single unified feature space Z and a single set of parameters P which defines a single decoder D are obtained.

In a first exemplary implementation of a shared training method, each combination $E_kD_k$ is trained independently, apart from the following parameter sharing and feature sharing components. Parameter sharing can be implemented by comparing the parameters $w_l^k$ of each decoder $D_k$ with the corresponding parameters of the other decoders $D_i$ with i =1, k-1, k+1, ..., N and l = 1, ..., L (L being the total number of parameters). For each $E_kD_k$ pair, a parameter loss can be obtained:

$$L_k = L_k^{SL} + \alpha \sum_{l=1}^{L} \sum_{i=1, i \neq k}^{N} L_{w_l^i, w_l^k}^{shared}$$

, where $L_{w_l^i, w_l^k}^{shared}$ can be the squared or absolute difference of weights, or any other appropriate comparison metric, and $\alpha$ is a weight of the shared parameters loss, which can be defined prior to the optimization. Then, the total parameter loss to be minimized is $L^{SL+ps} = \sum_{k=1}^{N} L_k$, where "ps" stands for parameter sharing.

Features sharing can be implemented using a shared training dataset for all the encoder-decoder pairs and by averaging the feature vectors $F_k$ from the different encoders after the forward pass of the optimization ($F_k = E_k(X_k)$, where $E_k$ is the $k^{th}$ encoder and $X_k$ is the input to encoder $E_k$ for the given data point $X_k$), and replacing the individual feature vectors by the averaged one during the backward pass (in other words, $L_k^{SL}$ is calculated based on the averaged feature vector rather than the individual ones).

Alternatively, instead of replacing the feature vectors by the averaged one, feature sharing can be implemented by adding an additional feature loss term $L^{fs}$ to the $L^{SL+ps}$ loss and jointly minimize :

$$L^{total} = L^{SL+ps} + L^{fs} = L^{SL+ps} + \delta \sum_{k=1}^{N} \sum_{i=1, i>k}^{N} \sum_{d=1}^{D} L_{F_d^k, F_d^i}^{comp} ,$$

where :

- D is the size of the training dataset,
- $F_d^k, F_d^i$ are the feature vectors $F_k$ and $F_i$ obtained for the data point (or sample) d within the training dataset D,
- $L_{F_d^k, F_d^i}^{comp}$ is the absolute difference, or squared difference, or cosine distance, etc. of the feature vectors $F_d^k, F_d^i$,
- $\delta$ is a weight of the feature loss, and
- "fs" stands for features sharing.

Once convergence has been achieved for all combinations, a final architecture is built with the N encoders $E_k$ and one decoder D wherein:

- the parameters for each encoder $E_k$ are the best parameters at convergence (obtained separately);
- the N feature spaces $Z_k$ obtained at convergence for the N combinations $E_kD_k$ are assumed to be nearly identical for all the encoders thanks to feature sharing, meaning that the feature vector produced by any encoder is valid to be used as an input to the decoder;
- and the parameters of the single decoder D are obtained from the sets $P_k$ of best parameters at convergence for each decoder $D_k$ e.g. using weighted average: $w_l = \frac{\sum_{k=1}^{N} c^k w_l^k}{\sum_{k=1}^{N} c^k}$ where the weights $c^k$ can be obtained empirically or based on the final metrics of each $E_kD_k$ model.

Shared training can also be implemented by adding a switchable batch normalization (SBN) layer in the neural network architecture, after the feature space, and before the decoder, as described in "Slimmable Neural networks" by Jiahui Yu, Linjie Yang, Ning Xu, Jianchao Yang and Thomas Huang, published as conference paper at ICLR 2019 can be used (https://arxiv.org/pdf/1812.08928.pdf).

The disclosed apparatus and method apply to data fusion in general. A few examples of applications will now be described for illustration purposes.

A first exemplary application relates to wearables for vital sign monitoring.

In a first set up, three sensors PPG + Accelerometer + Gyroscope are combined where the PPG provides vital information and accelerometers and gyroscopes can be used to eliminate any possible motion artifacts in the PPG signal. The three sensors provide data which need to be fused together to generate reliable and accurate breathing rate, heart rate etc. In this case, the neural network can advantageously comprise three neural networks, one for a first set of data sources comprising PPG signal only, one for a second set of data sources comprising both PPG and accelerometer signals, and one for a third set of data sources comprising both PPG and gyroscope signals. The vital signs monitoring application would still generate desired results even in the absence of accelerometer and/or gyroscopes for motion artifact compensation.

In a second set up, two sensors are combined PPG + ECG. Both the PGG and the ECG signals can directly provide some sort of vital signs information, unlike accelerometers and gyroscopes, which only provide information about motion. In this case, the neural network can advantageously comprise three encoders: one for a first set of data sources comprising PPG signals only, one for a second set of data sources comprising ECG signals only, and one for a third set of data sources comprising both PPG and ECG signals.

Another vital signs setup is to use several PPG sensors which are all measuring the absorption of the light by the blood, but at different skin depths as they're generated using different LEDs wavelength (for example, green, red, infrared). Different skin penetration provides redundant and complementary information of the person's vital signs. Having the three wavelength PPG can make an apparatus more robust to motion. With the architecture disclosed herein, the apparatus won't stop working upon failure of one of the sensors. It will enter a reduced accuracy mode where only 2 out of 3 signals are used.

A second exemplary application relates to augmented/virtual reality (AR/VR). In AR/VR applications, it is essential to correctly estimate the distance of different objects in a scene from the camera as well as the lighting of the objects. In an exemplary set up, three sensors are used: RGB + dTOF + ALS (Ambient Light Sensors) with several encoders associated with the different sets of data sources e.g. RGB+dToF, RGB+ALS, RGB+dToF+ALS etc.

A third exemplary application relates to autonomous driving. In autonomous driving, a very critical aspect is to correctly estimate the presence/absence of objects near the vehicle, to navigate safely. Typical sensor fusion algorithms rely on ULS (Ultrasonic-based distance sensors), cameras, LIDAR (Light-based distance sensors) etc. However, most of such fusion algorithms have now been replaced by DNNs. These DNNs have fixed inputs, which means they rely on either all the sensors, or a fixed combination of them to produce desirable object detection results. This existing system can be made more robust using the principles proposed in this patent. Using a neural network with the multiple encoders - single decoder architecture disclosed herein, like RGB+LIDAR, RBG+ULS, RGB+ULS+LIDAR etc. can make the detection of objects more robust to the presence/absence of one or more sensors.

Another crucial aspect of autonomous driving is localization as it allows making driving decisions on the go. The localization implies finding the location of the autonomous vehicle in a 3D environment. It usually involves three categories of data: RGB, IMU (Inertial Measurement Unit), HDMaps (High Definition Maps). Any malfunction in the IMU sensors can cause a severe degradation of the localization algorithm. The present disclosure allows to alleviate this problem by designing a neural network with encoders like RGB+HDMaps, RGB+IMU, RGB+IMU+HDMaps etc. and, at a given time, choosing the right encoder-decoder combination based on the available functioning sensors.

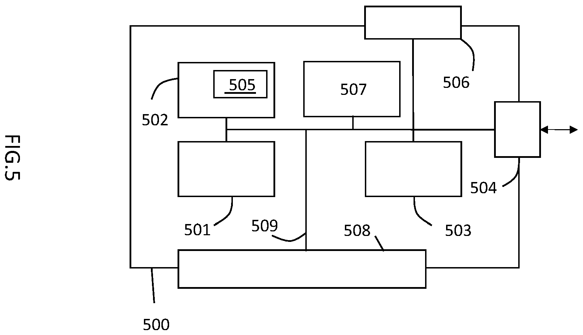

FIG.5 is a block diagram of an apparatus 500 that can be used to implement an data fusion method or a training method as disclosed herein. The apparatus 500 comprises a processor 501, a memory 502, a user interface 503, a communication interface 504 enabling communication with other devices through e.g. a wireless network, a display 506 suitable for displaying data to a user, a working memory 507, and one or more sensors 508. The various components of the apparatus 500 are connected via a communication bus 509. Memory 502 contains software code 505. Memory 507 is used to store and manage data. The apparatus may include other components, and some components may be absent, as required by the context of use and the function of the apparatus. For example, the user interface and/or or the wireless communication and/or the display and/or the sensors may be absent or may be external parts connected to the apparatus through one or more connectors. For example, apparatus 500 may also include other components typically found in computing systems, such as an operating system, queue managers, device drivers, or one or more network protocols that are stored in memory 502 and executed by the processor 501.

According to a first aspect of the disclosure, when the processor executes software code 505, it causes the apparatus to implement a data fusion method according to one or more described embodiments, such as those described in connection with FIG.1 and FIG.2. The apparatus 500 may be a smartwatch, a car or a mobile phone which operate a neural network as disclosed herein.

According to a second aspect of the disclosure, when the processor executes software code 505, it causes the apparatus to implement a training method according to one or more described embodiments, such as those described in connection with FIG.3 and FIG.4. The apparatus 500 may be a computer used to train a neural network as disclosed herein and send the neural network, or upgrades of the neural network, to another apparatus such as a smartwatch, a car or a mobile phone which will operate the neural network.

The processor 501 may be any type of processor such as a general purpose central processing unit ("CPU") or a dedicated microprocessor such as an embedded microcontroller or a digital signal processor ("DSP"), or a graphics processing unit ("GPU").

Although aspects herein have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

For example, the data disclosed herein may be stored in various types of data structures which may be accessed and manipulated by a programmable processor (e.g., CPU or FPGA) that is implemented using software, hardware, or combination thereof.

It should be appreciated by those skilled in the art that any block diagrams herein represent conceptual views of illustrative circuitry embodying the principles of the disclosure. Similarly, it will be appreciated that any flow charts, flow diagrams, state transition diagrams, and the like represent various processes which may be substantially implemented by circuitry.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, blocks denoted as "means (or modules) configured to perform ..." (a certain function) shall be understood as functional blocks comprising circuitry that is adapted for performing or configured to perform a certain function. A means or module being configured to perform a certain function does, hence, not imply that such means or module necessarily is performing said function (at a given time instant). Moreover, any entity described herein as "means" or "module", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, graphics processing units (GPU), network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used herein, the term "and/or," includes any and all combinations of one or more of the associated listed items.

When an element is referred to as being "connected," or "coupled," to another element, it can be directly connected or coupled to the other element or intervening elements may be present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

**Claims**

1. An apparatus comprising a neural network module for receiving input data from a plurality of data sources, the neural network module comprising:

   - a plurality of encoders, a given encoder being configured to receive input data from a given set of data sources among the plurality of data sources, the sets of data sources being different from one another,
   - a decoder configured to receive a feature vector generated by one of the encoders and to generate an estimation based on the received feature vector.

2. An apparatus as claimed in claim 1, further comprising a selection module for selecting among the plurality of encoders, at a given point in time, the encoder which feature vector is received by the decoder and used to generate the estimation.

3. An apparatus as claimed in claim 2, wherein the selection is based on the availability of the input data at the encoders at the given point in time.

4. An apparatus as claimed in any of claims 2 or 3, wherein the selection module is configured to select an encoder which, at the given point in time, receives input data from all data sources of its set of data sources.

5. An apparatus as claimed in any of claims 1 to 4, wherein at least part of the data sources are sensors.

6. A computer implemented data fusion method comprising receiving input data and providing the input data to a neural network, the neural network comprising:

   - a plurality of encoders, a given encoder being configured to receive input data from a given set of data sources among the plurality of data sources, the sets of data sources being different from one another,
   - a decoder configured to receive a feature vector generated by one of the encoders and to generate an estimation based on the received feature vector.

7. A computer implemented data fusion method as claimed in claim 6, further comprising selecting among the plurality of encoders, at a given point in time, the encoder which feature vector is received by the decoder and used to generate the estimation.

8. A computer implemented data fusion method as claimed in claim 7, wherein said selecting is based on the availability of the input data at the encoders at the given point in time.

9. A computer implemented data fusion method as claimed in any of claims 7 or 8, wherein said selecting comprises selecting the encoder which, at the given point in time, receives input data from all data sources of its set of data sources.

10. A computer implemented data fusion method as claimed in any of claims 6 or 7, wherein at least part of the data sources are sensors.

11. A computer implemented method for training the neural network of an apparatus as claimed in any of claims 1 to 5, or of a data fusion method as claimed in any of claims 6 to 10, the method using training data comprising training input data for all data sources and target estimations corresponding to said training input data, the method comprising N steps, N being the number of encoders in the neural network, wherein at step k, k being an integer within 1 and N:

   - a supervised learning loss $L_k^{SL}$ is calculated for a combination of the encoder $E_k$ and the decoder D,

   - when k is higher than 1, a knowledge distillation loss $L_{i,k}^{KD}$ is calculated for each combination of the encoder $E_i$ and the decoder D, i being an integer varying within 1 and k-1,

   - a total loss $L_k^T$ is calculated from the supervised learning loss $L_k^{SL}$ and the knowledge distillation loss(es)

$$L_{i,k}^{KD}$$
,

- parameters are learned for the encoder $E_k$ and the decoder D by optimizing the total loss $L_k^T$ ,

- the parameters learned for the encoder $E_k$ are frozen upon convergence of the total loss $L_k^T$ ,

the supervised learning loss $L_k^{SL}$ being calculated by comparing estimations provided by the combination $E_k D$ of the encoder $E_k$ and the decoder D, based on the training input data for the set of data sources of the encoder $E_k$, with the target estimations corresponding to said training input data,

the knowledge distillation loss $L_{i,k}^{KD}$ being calculated by comparing estimations provided by the combination $E_i D$ of the encoder $E_i$ and the decoder D, based on the training input data for the set of data sources of the encoder $E_i$, with reference estimations provided by the combination $E_i D^{k-1}$ of the encoder $E_i$ and the decoder D when the parameters of the decoder D are set to the parameters learned during the previous step k-1.

12. A computer implemented method for training the neural network of an apparatus as claimed in any of claims 1 to 5, or of a data fusion method as claimed in any of claims 6 to 10, the method using training data comprising training input data for all data sources and target estimations corresponding to said training input data, wherein

- a supervised learning loss $L_k^{SL}$ is calculated for each combination of an encoder $E_k$ and the decoder D, k being an integer within 1 and N, N being the number of encoders in the neural network, by comparing estimations provided by the combination of the encoder $E_k$ and the decoder D, based on the training input data for the set of data sources of the encoder $E_k$, with the target estimations corresponding to said training input data,

- a total loss $L^T$ is calculated from the N supervised learning losses $L_k^{SL}$ , k=1 to N
- parameters are learned jointly for the encoders and the decoder by optimizing the total loss *LT*.

13. A computer implemented method for training the neural network of an apparatus as claimed in any of claims 1 to 5, or of a data fusion method as claimed in any of claims 6 to 10, the method using training data comprising training input data for all data sources and target estimations corresponding to said training input data, wherein:

- N combinations of an encoder $E_k$ and a decoder $D_k$ are trained by sharing a feature space $Z_k$ obtained separately by each encoder $E_k$ and parameters $P_k$ obtained separately for each decoder $D_k$, k being an integer within 1 and N and N being the number of encoders in the neural network, and:
- upon convergence a single set of optimized parameters for the decoder D is obtained from the N sets of separately optimized parameters $P_k$, k=1 to N.

14. A computer program comprising instructions which when executed by an apparatus cause the apparatus to perform any of the training method of any of claims 11 to 13.

15. A computer program comprising instructions which when executed by an apparatus cause the apparatus to perform any of the data fusion method of any of claims 6 to 10.

FIG.1

FIG.2

k=1

A → $E_1$ → FS → D → estimated output $\xrightarrow{L_1^{SL}}$ target estimations

estimated output $\xrightarrow{E_1D^1}$ reference estimations

k=2

A → frozen $E_1$ → FS → D → estimated output using frozen $E_1$ $\xrightarrow{L_{1,2}^{KD}}$ reference estimations

B → $E_2$ → FS

estimated output $\xrightarrow{L_2^{SL}}$ target estimations

FIG.3

FIG.4

FIG.5

| | Europäisches Patentamt |
| --- | --- |
| | European Patent Office |
| | Office européen des brevets |

## EUROPEAN SEARCH REPORT

**Application Number**

EP 23 30 7210

### DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | Changhao Chen: "Learning Selective Sensor Fusion for State Estimation", , 18 May 2022 (2022-05-18), pages 1-15, XP093161754, Retrieved from the Internet: URL:https://arxiv.org/pdf/1912.13077 [retrieved on 2024-05-14] * the whole document * | 1-15 | INV. G06N3/0455 G06N3/09 |
| X | HONGFEI XUE: "DeepFusion : A Deep Learning Framework for the Fusion of Heterogeneous Sensory Data", PROCEEDINGS OF THE TWENTIETH ACM INTERNATIONAL SYMPOSIUM ON MOBILE AD HOC NETWORKING AND COMPUTING, 2 July 2019 (2019-07-02), pages 151-160, XP093162013, New York, NY, USA ISBN: 978-1-4503-6764-6 * the whole document * | 1-15 | |
| X | KUMAR KRITI ET AL: "AutoFuse: A Semi-supervised Autoencoder based Multi-Sensor Fusion Framework", 2021 INTERNATIONAL JOINT CONFERENCE ON NEURAL NETWORKS (IJCNN), IEEE, 18 July 2021 (2021-07-18), pages 1-7, XP033974778, DOI: 10.1109/IJCNN52387.2021.9533389 [retrieved on 2021-09-08] * the whole document * | 1-15 | **TECHNICAL FIELDS SEARCHED (IPC)** G06N |

-/--

The present search report has been drawn up for all claims

| Place of search | Date of completion of the search | Examiner |
| --- | --- | --- |
| The Hague | 27 May 2024 | Moro Pérez, Gonzalo |

EPO FORM 1503 03.82 (P04C01)

| Europäisches Patentamt European Patent Office Office européen des brevets | **EUROPEAN SEARCH REPORT** | **Application Number**<br>EP 23 30 7210 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BALAZS GABOR ET AL: "Deep Grid Fusion of Feature-Level Sensor Data with Convolutional Neural Networks", 2019 IEEE INTERNATIONAL CONFERENCE ON CONNECTED VEHICLES AND EXPO (ICCVE), IEEE, 4 November 2019 (2019-11-04), pages 1-6, XP033692844, DOI: 10.1109/ICCVE45908.2019.8965213 [retrieved on 2020-01-21] * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 27 May 2024 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)